# EUROPÄISCHE PATENTSCHRIFT

(11) **EP 0 740 617 B1**
(45) Veröffentlichungstag und Bekanntmachung des Hinweises auf die Patenterteilung: **15.07.1998**
(21) Anmeldenummer: 95939273.9
(22) Anmeldetag: 14.11.1995
(51) Int. Cl.: B60H 1/00

(54) **HEIZUNGS- UND/ODER KLIMAEINRICHTUNG**
HEATING AND/OR AIR-CONDITIONING SYSTEM
SYSTEME DE CHAUFFAGE ET/OU DE CLIMATISATION

(30) Priorität: 28.11.1994 DE 4442000
(43) Veröffentlichungstag der Anmeldung: 06.11.1996
(73) Patentinhaber: Behr GmbH & Co., 70469 Stuttgart (DE)
(72) Erfinder: DENK, Walter, D-71254 Ditzingen (DE); KNIELE, Wolfgang, D-71254 Ditzingen (DE); MARTIN, Ralf, D-71726 Benningen (DE); NEUMANN, Vladimir, D-75196 Remchingen (DE); RAULAND, Werner, D-75181 Pforzheim (DE); SECZER, Leopold, D-71729 Erdmannshausen (DE)
(74) Vertreter: Wilhelm & Dauster Patentanwälte European Patent Attorneys
(86) Internationale Anmeldenummer: EP9504462
(87) Internationale Veröffentlichungsnummer: WO9616827

(56) Entgegenhaltungen:
- DE-A- 3 203 927
- DE-A- 4 119 474
- PATENT ABSTRACTS OF JAPAN Bd. 10, Nr. 146 (M-482) & JP,A,61 001 527 (HITACHI SEISAKUSHO K.K.) 07 Januar 1986

## Beschreibung

Die Erfindung betrifft eine Heizungs- und/oder Klimaeinrichtung, insbesondere für den Innenraum eines Kraftfahrzeuges, mit einem Gehäuse mit mindestens einem Heizkörper und einem Verdampfer, mit Ein- und Auslaßöffnungen und mit zwischen diesen verlaufenden Kanälen für wahlweise den Verdampfer, den Heizkörper oder beide durchströmende Luft sowie mit den Kanälen zugeordneten Steuereinrichtungen zum Schließen oder Öffnen der Kanäle und zur Bestimmung des freien Querschnittes für die durchströmende Luftmenge.

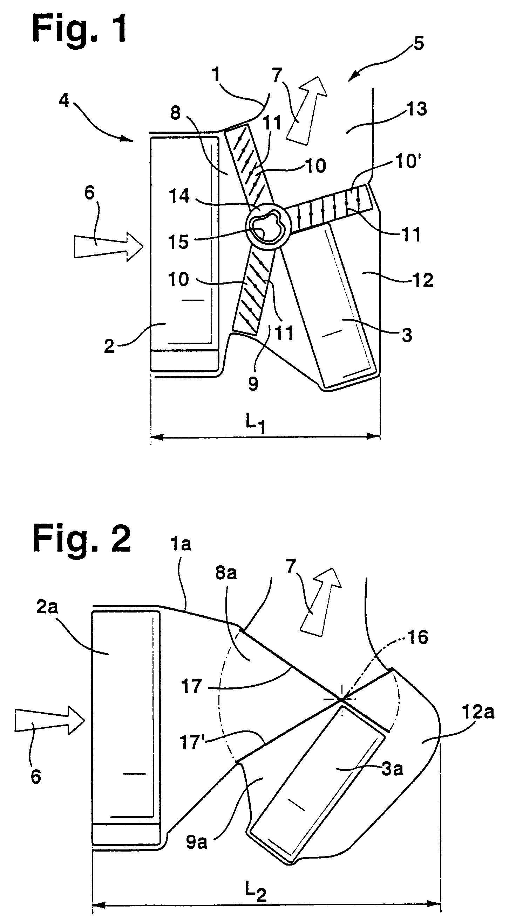

Heizungs- und/oder Klimaeinrichtungen dieser Art sind bekannt. Der grundsätzliche Aufbau solcher Einrichtungen ist in Fig. 2 gezeigt. Bei diesen bekannten Einrichtungen werden als Steuereinrichtungen schwenkbare Klappen verwendet, die so angeordnet werden, daß sie als doppelarmiger Hebel wirken und mit beiden von ihrer Schwenkachse abragenden Teilen entsprechend angeordnete Kanäle öffnen oder verschließen. Die Ausgestaltung wird dabei so vorgenommen, daß - z.B. für Kühlzwecke - die vom Verdampfer kommende Luft bei entsprechender Stellung der Steuerklappe unmittelbar in den Fahrzeuginnenraum oder - für Heiz- und/oder Trocknungszwecke - insgesamt durch den Heizkörper und erst dann in den Innenraum geleitet wird, wobei je nach Schwenkstellung der Klappe auch Zwischenstellungen möglich sind. Heizungs- und/oder Klimaeinrichtungen dieser Art benötigen bauartbedingt eine gewisse Einbautiefe, die in Fig. 2 mit L₂ bezeichnet ist.

Aus der DE 41 19 474 A1 ist eine Heiz- oder Klimaanlage für den Fahrgastraum eines Kraftfahrzeuges bekannt geworden, bei der man, um die Vermischung zwischen Warm- und Kaltluft zu fördern, jalousieartige Klappen als Steuerorgan für die Zuströmung von Frisch- und Warmluft vorgesehen hat. Durch diese Ausgestaltung könne man daher, wie dort ausgeführt ist, in einem vergleichsweise kleinen Mischraum eine temperaturhomogene Luft zur Weiterleitung in den Fahrgastraum bereitstellen. Die dort gezeigte Anordnung trägt aber nicht dazu bei, den Bauraum der Heiz- oder Klimaanlage zu verkleinern. Zudem ist die Anordnung mehrerer schwenkbarer Klappen, die jalousieartig zusammenwirken sollen, die aber einzeln eingebaut werden müssen, relativ aufwendig.

Das gilt auch für andere bekannte Heiz- und Belüftungseinrichtungen für den Fahrgastraum eines Kraftfahrzeuges (DE 32 03 927 A1), bei denen man ein Klappenregister im Bereich des Motorraumes vor einen Wärmetauscher geschaltet hat, das mit einem gegensinnig bewegbaren Verschlußglied für eine Umluftleitung gekoppelt ist. Bei dieser Einrichtung bleiben nahezu alle anderen noch erforderlichen Steuerorgane für die Luftströmung als Schwenkklappen ausgebildet.

Der Erfindung liegt die Aufgabe zugrunde, für Heizungs- und/oder Klimaeinrichtungen der eingangs genannten Art nach einer Lösung zu suchen, mit der der Einbauraum wesentlich verkleinert werden kann, ohne daß der Bauaufwand wesentlich erhöht oder Nachteile hinsichtlich der Funktion der Einrichtungen hingenommen werden müssen.

Zur Lösung dieser Aufgabe wird bei einer Heizungs- und/oder Klimaeinrichtung der eingangs genannten Art vorgesehen, daß die Steuereinrichtungen als dem Querschnitt der Kanäle angepaßte Einbaurahmen mit mehreren im Rahmen geführten Lamellen ausgebildet sind, deren Abmessungen so gewählt sind, daß sie in einer Schließstellung den Querschnitt des Rahmens abdecken. Diese Ausgestaltung führt dazu, daß der für die Schwenkbewegung einer Klappe erforderliche Raum nicht mehr benötigt wird, so daß sich wesentlich kleinere Einbaulängen verwirklichen lassen, wie das anhand der später noch zu beschreibenden Fig. 1 mit der Länge L₁ angedeutet ist, die nur noch etwa 60% der Länge einer mit einer Schwenkklappe ausgerüsteten Einrichtung aufweist. Des weiteren können auch die Luftaustrittsöffnungen aus dem Mischraum mit solchen Einbaurahmen mit Lamellen ausgestaltet sein, so daß ein Bauraumgewinn realisierbar ist. Dabei ist der Einbau der die Lamellen aufnehmenden Rahmen einfach, insbesondere wenn Einschiebeöffnungen oder Aufnahmefächer für diese Rahmen im Gehäuse vorgesehen werden.

In Weiterbildung der Erfindung können die Lamellen jeweils um 90° schwenkbar um jeweils eine Achse im Rahmen gelagert sein. Es ist aber auch möglich, die Lamellen in der Art von Blenden parallel zueinander im Rahmen verschiebbar anzuordnen. In beiden Fällen wird es möglich, die Lamellen untereinander zu verbinden und gemeinsam anzutreiben. Natürlich ist auch eine Kombination von verschwenkbaren und verschiebbaren Lamellen möglich.

In Weiterbildung der Erfindung können die Lamellen auch als Gitter mit in Strömungsrichtung ausgerichteten Strömungsprofilen ausgebildet sein, wobei zwei dieser Gitter gegeneinander zur Beeinflussung des freien Querschnittes verschiebbar angeordnet sind und ein Gitter fest steht, das andere dagegen verschiebbar ist. Die Gitter können dabei jeweils mit Lamellen versehen sein, die ein in der Anströmrichtung ausgerichtetes tropfenförmiges strömungsprofil bilden, wobei der Zwischenraum zwischen benachbarten Lamellen in etwa der größten Breite der Lamellen des zweiten Gitters entspricht. Werden bei dieser Ausführungsform die beiden Gitter in Strömungsrichtung gegeneinander bewegbar ausgebildet, dann werden die Profile der Lamellen eines Gitters mehr oder weniger in den freien Querschnitt zwischen den Profilen des anderen Gitters hereinbewegt, so daß dadurch der freie Querschnitt einstellbar wird oder die so ausgebildete Lamellenanordnung auch vollständig abgeschlossen werden kann.

Bei einer anderen Variante ist es auch möglich, einen Teil der Strömungsprofile quer zur Anströmrichtung verschiebbar auszubilden, so daß beispielsweise jeweils die in Strömungsrichtung gerichteten Frontpartien der Strömungsprofile sich in den Zwischenraum zwischen benachbarten Profilen verschieben, so daß auch auf diese Weise eine Steuerung des freien Querschnittes oder ein Abschließen des Gitters möglich ist. In allen Fallen kann ein gemeinsamer Antrieb für die Lamellenverstellung vorgesehen werden.

Die Erfindung ist anhand von Ausführungsbeispielen in der Zeichnung gezeigt und wird im folgenden erläutert. Es zeigen:
- Fig. 1: einen schematischen Längsschnitt durch eine erfindungsgemäß aufgebaute erste Ausführungsform einer Heizungs- und/oder Klimaeinrichtung nach der Erfindung für ein Kraftfahrzeug,
- Fig. 2: einen Schnitt ähnlich Fig. 1 jedoch durch eine Einrichtung nach dem Stand der Technik,
- Fig. 3: eine perspektivische Darstellung eines der bei der Ausführungsform nach Fig. 1 verwendeten Einbaurahmens in der verschlossenen Stellung der Lamellen,
- Fig. 4: die Ansicht des Einbaurahmens der Fig. 3 in Richtung des Pfeiles IV,
- Fig. 5: den Einbaurahmen der Fig. 3, jedoch mit voll geöffneten Lamellen,
- Fig. 6: die Ansicht des Einbaurahmens gemäß Fig. 4, jedoch in der Stellung mit geöffneten Lamellen,
- Fig. 7: die Frontansicht einer anderen Ausführungsform eines Einbaurahmens,
- Fig. 8: den Schnitt durch die Ausführungsform der Fig. 7 längs der Schnittlinie VIII-VIII,
- Fig. 9: eine Schnittdarstellung ähnlich Fig. 8, jedoch bei einer anderen Ausführungsform in der Stellung mit voll geöffnetem Lamellengitter,
- Fig. 10: die Darstellung des Querschnittes der Fig. 9, jedoch in einer Stellung, in der die Luftdurchströmung teilweise gedrosselt ist,
- Fig. 11: den Querschnitt der Fig. 9 mit einem vollständig verschlossenen Strömungsquerschnitt,
- Fig. 12: die Frontansicht ähnlich Fig. 7 einer anderen Variante eines Einbaurahmens,
- Fig. 13: den Schnitt durch den Einbaurahmen der Fig. 12 längs der Linie XIII-XIII in der geöffneten Stellung,
- Fig. 14: den Schnitt durch die Darstellung der Fig. 13 längs der Schnittlinie XIV,
- Fig. 15: eine Ansicht ähnlich Fig. 12, jedoch bei einer weiteren Variante eines Einbaurahmens mit einer Lamellenanordnung, deren Lamellen parallel zueinander im Rahmen verschiebbar sind und
- Fig. 16: die Draufsicht auf den Einbaurahmen der Fig. 15 in Richtung des Pfeiles XVI gesehen.

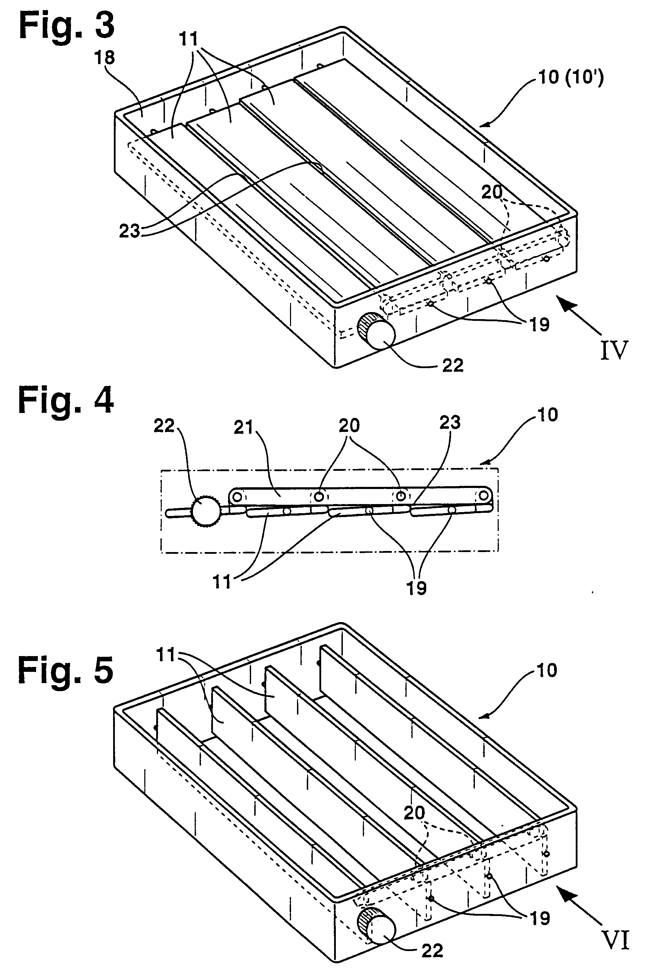

In der Fig. 1 ist schematisch ein Gehäuse (1) einer Heizungs- und/oder Klimaeinrichtung für ein Kraftfahrzeug gezeigt, in dem ein Verdampfer (2) und ein Heizkörper (3) angeordnet sind. Das Gehäuse (1) weist einen Einlaß (4) und einen Auslaß (5) für strömende Luft auf, die im Sinn des Pfeiles (6) beispielsweise mit Hilfe eines Gebläses in das Gehäuse (1) hinein und im Sinn des Pfeiles (7) wieder aus dem Gehäuse (1) austritt, um in nicht näher dargestellter Weise in den Innenraum eines Kraftfahrzeuges einzutreten. Zwischen Einlaß (4) und Auslaß (5) sind beim Ausführungsbeispiel zwei Strömungswege in der Form von Kanälen (8 und 9) vorgesehen, von denen der Kanal (8) durch einen Einbaurahmen (10) mit verschwenkbaren Lamellen (11) und der Kanal (9) durch einen weitgehend bauartgleichen Einbaurahmen (10) zu öffnen oder zu verschließen ist, der ebenfalls mit Lamellen (11) versehen ist, wie im einzelnen noch anhand der Fig. 3 bis 6 erläutert werden wird. Der Kanal (9) führt in eine Kammer (12), in der der Heizkörper (3) angeordnet ist. Diese Kammer (12) ist wiederum an ihrer Einmündung in die Austrittskammer (13), die sich angrenzend an den Kanal (8) hinter dem Einbaurahmen (10) erstreckt, durch einen weiteren Einbaurahmen (10') abzuschließen oder zu öffnen, der im Prinzip ebenso ausgebildet ist, wie die Einbaurahmen (10) im Kanal (8 und 9). Der Luftstrom kann durch den Drehwinkel der Lamellen (11) gerichtet werden. Dadurch kann eine bessere Durchmischung von zwei Luftströmen erreicht werden.

Die drei mit den Lamellen (11) versehenen Einbaurahmen (10 und 10') sind beim Ausführungsbeispiel etwa sternförmig zueinander angeordnet und können senkrecht zur Zeichenebene in nicht gezeigte Einbauöffnungen des Gehäuses (1) in dieses eingeschoben oder beim Zusammenbau des Gehäuses in entsprechende Aufnahmefächer eingesetzt werden. Sie werden, wie schematisch angedeutet ist, von einem gemeinsamen Antrieb (14) aus, der mit einer drehbaren Kurvenscheibe (15) versehen ist, angetrieben. Die Kurvenscheibe (15) ist dabei so ausgelegt, daß je nach Drehwinkel eine Zuordnung der geöffneten oder geschlossenen Stellung der beiden Einbaurahmen (10) so erfolgt, daß einer der Rahmen geschlossen ist, wenn der andere geöffnet ist. Die Lamellen des Einbaurahmens (10') befinden sich in der voll geöffneten Stellung, wenn die Lamellen (11) des im Kanal (9) angeordneten Einbaurahmen voll geöffnet sind. Sie werden geschlossen, wenn auch die Lamellen (11) des Einbaurahmens im Kanal (9) geschlossen und die Lamellen (11) des Einbaurahmens (10) im Kanal (8) voll geöffnet sind.

Es ergeben sich dann folgende wahlweise einzustellenden Arbeitsstellungen:

Der Strömungskanal (8) ist geöffnet. Der Strömungskanal (9) und die Kammer (12) sind verschlossen. Frischluft, die im Sinne des Pfeiles (6) eintritt, wird durch den Verdampfer 82) geführt und kann zur Kühlung im Sinne des Pfeiles (7) in den Fahrgastraum eintreten.

Der Kanal (8) ist geschlossen. Der Kanal (9) und die Kammer (12) dagegen offen. Die Frischluft tritt dann durch den Verdampfer (2) und durch den Heizkörper (3), wird getrocknet und aufgeheizt und kann dann in den Fahrgastinnenraum eintreten. Werden die Lamellen (11) teilweise geöffnet, wie das in Fig. 1 dargestellt ist, dann tritt ein Teil Frischluft unmittelbar in den Fahrgastraum und ein anderer Teil wird zusätzlich über den Heizkörper (3) geleitet.

In der Fig. 2 ist das analoge Gehäuse (1a) einer Heizungs- und/oder Klimaeinrichtung nach dem Stand der Technik gezeigt. Es sind für gleiche Teile jeweils die gleichen Bezugszeichen mit dem Zusatz a verwendet. Der Verdampfer (2a) wird wieder im Sinn des Pfeiles (6) angeströmt und der Heizkörper (3a) kann je nachdem, ob die Kanäle (8a) oder (9a) freigegeben sind, mit in den Strömungsverlauf einbezogen werden oder nicht. Im Unterschied zu den in der Fig. 1 verwendeten, als Einbaurahmen mit Lamellen ausgebildeten Steuereinrichtungen zum Öffnen oder Schließen der Kanäle, ist hier eine um die Achse (16) gelagerte Steuerklappe (17) vorgesehen, die in ihrer Lage (17') den Kanal (9) und damit auch die Kammer (12a) abschließt, so daß Frischluft in den Fahrgastinnenraum eintritt. In der Stellung (17) schließt die Klappe den Kanal (8a) ab, so daß in dieser Stellung die Luft durch den Verdampfer und durch den Heizkörper (3a) geführt wird. Wie mit der strichpunktierten Linie angedeutet ist, benötigt die als doppelarmige Hebel ausgebildete Klappe (17) für ihre Verschwenkung verhältnismäßig viel Raum. Dies führt dazu, daß die Gesamtlänge (L₂) Einrichtung nach dem Stand der Technik größer ist als die zum Vergleich in Fig. 1 eingetragene Einbaulänge (L₁) einer erfindungsgemäßen Einrichtung. Die Länge L₁ beträgt nur etwa 0,6 L₂. Bei kleineren Öffnungswinkel ergibt sich auch eine Strähnigkeit des Luftstromes, die eine wirksame Durchmischung behindert.

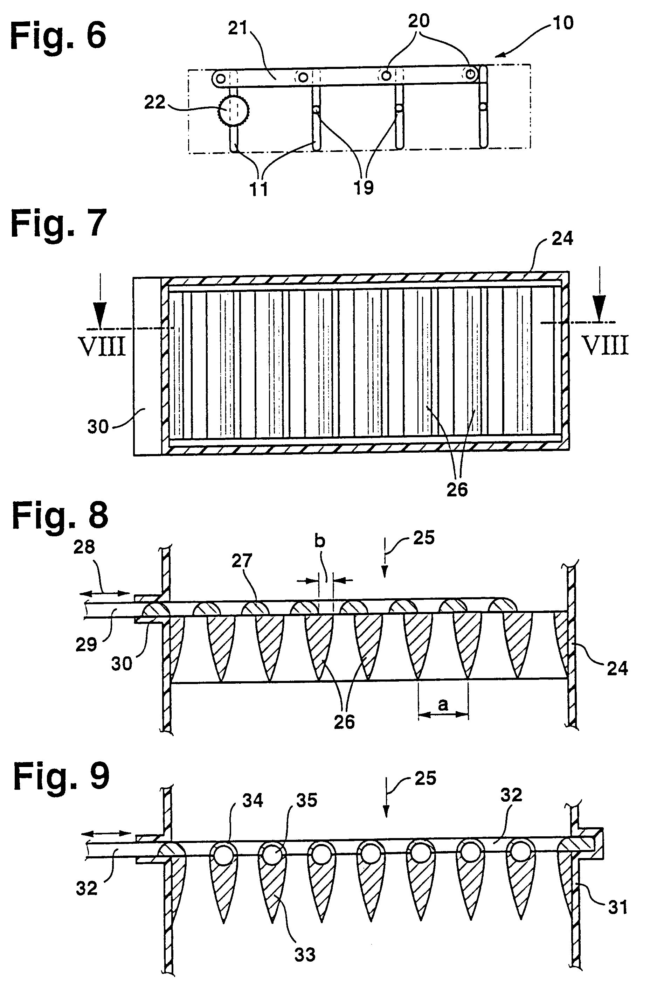

In den Fig. 3 bis 6 sind die Einbaurahmen (10) bzw. (10') der Fig. 1 in ihrem Aufbau gezeigt. Die bestehen aus einem in seinen Abmessungen den Abmessungen der Kanäle (8) bzw. (9) oder dem Austritt aus der Kammer (12) angepaßten Rahmen (18), in dem die mit Schwenkzapfen (19) versehenen Enden der Lamellen (11) gelagert sind, die jeweils mit einer ihrer Längskanten über eine fest angebrachte Lasche (20) gemeinsam an einem Verstellhebel (21) angebracht sind, so daß sie sich durch einen gemeinsamen Antrieb verstellen lassen. Dies wird beim Ausführungsbeispiel dadurch erreicht, daß über ein nicht gezeigtes Ritzel eines Antriebsmotors ein fest mit einer der Lamellen (11) verbundenes Ritzel (22) so angetrieben wird, daß die Lamellen (11) jeweils einen Schwenkweg um etwa 90° zurücklegen. Die Lamellen (11) können dadurch gemeinsam aus der in der Fig. 4 und 3 gezeigten Schließstellung, in der sie aneinander mit angedeuteten Dichtlippen (23) anliegen, in die in den Fig. 5 und 6 gezeigte Öffnungsstellung geschwenkt werden. In Zwischenstellungen ist dabei der freie Durchströmungsquerschnitt entsprechend gedrosselt.

In den Fig. 7 und 8 ist eine Variante eines Einbaurahmens mit einem Lamellengitter insofern gezeigt, als hier keine schwenkbaren Lamellen (11) im Rahmen (24) angeordnet sind, sondern über den rechteckigen Querschnitt verteilt angeordnete Strömungsprofile in Tropfenform, die sich entgegen der Durchströmungsrichtung (25) verjüngen. Alle diese als Strömungsprofile ausgebildeten Lamellen (26) sind mit einer gegen die Strömungsrichtung weisenden Abschlußkappe (27) versehen, die sich, wie in Fig. 8 zu sehen ist, im Sinn der Pfeile (28) gegenüber dem feststehenden Teil (26) der Profillamellen verschieben läßt. In Fig. 8 ist dabei eine Stellung gezeigt, in der die wiederum gemeinsam an einem Verschieberahmen (29) angeordneten Kappenteile (27) in eine Zwischenlage zwischen die im gleichmäßigen Abstand (a) zueinander angeordneten Profillamellen (26) geschoben sind. In dieser Stellung ist eine gedrosselte Durchströmung des Einbaurahmens (24) möglich. Werden die Kappenteile (27) noch mehr nach links verschoben, bis sie den freien Raum zwischen benachbarten Profilen (26) völlig abschließen, dann ist der freie Durchströmungsquerschnitt geschlossen. Werden sie aus der in der Fig. 8 gezeigten Stellung um den Betrag (b) nach rechtsverschoben, so ist der Durchströmungsquerschnitt vollständig geöffnet. Der Schieberahmen (29) wird bei dieser Ausführungsform in einer nicht näher gezeigten Führung, die bei 30 angedeutet ist, im Sinn der Pfeile (28) verschiebbar gehalten.

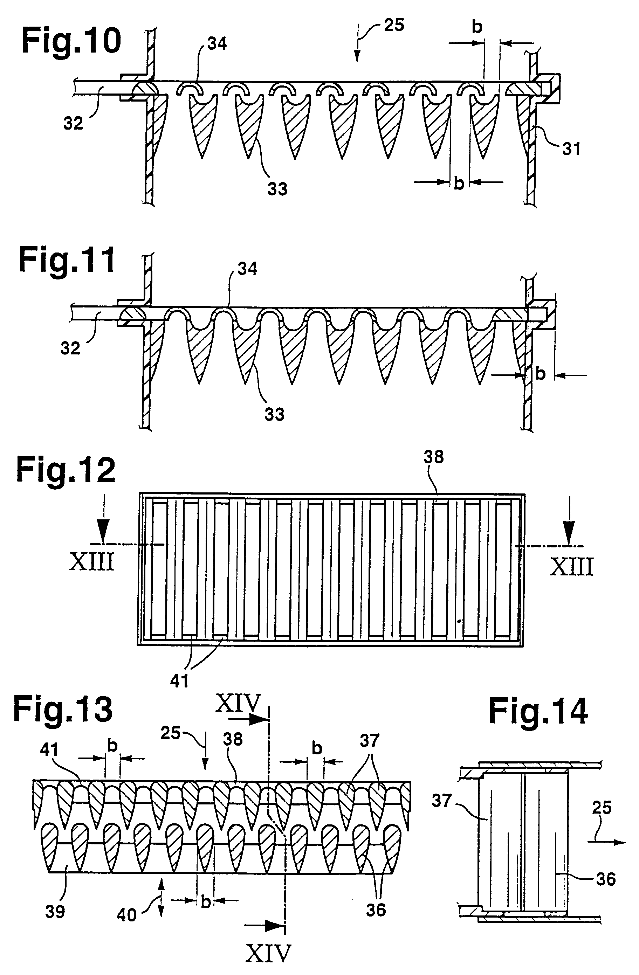

In den Fig. 9 bis 11 ist eine Variante eines Einbaurahmens (31) gezeigt, der im Prinzip in der gleichen Weise arbeitet, wie der Gitterrahmen der Fig. 7 und 8. Auch hier ist in dem Einbaurahmen (31 eine Reihe von im gleichem Abstand zueinander angeordneten und über die Querschnittsfläche verteilten Lamellen (33) mit einem tropfenförmigen Strömungsprofil vorgesehen, bei denen ebenfalls die gegen die Strömungsrichtung (25) weisenden Köpfe in einem gegenüber dem Rahmen (31) verschiebbaren Rahmen (32) angeordnet sind. In der in der Fig. 9 gezeigten Lage, in der der volle Strömungsquerschnitt durch dieses Gitter gezeigt ist, sind zwischen den bewegbaren Köpfen (34) und den feststehenden Profilen (33) durchgehende Öffnungen (35) mit Kreisquerschnitt gebildet, deren Bedeutung in der in der Fig. 10 gezeigten Zwischenlage deutlich wird. In dieser Stellung nämlich, in der der Schieberahmen (32) jeweils um den Betrag (b) der Hälfte einer quer zur Strömungsrichtung (25) gemessenen Breite eines Profiles (33) verschoben ist, decken die Köpfe (34), da alle Profile untereinander einen solchen Abstand aufweisen, daß die freie Durchtrittsbreite zwischen zwei Profilen (33) das Maß (b) aufweist, gerade die Hälfte des freien Strömungsquerschnittes zwischen benachbarten Lamellenprofilen (33) ab. Wegen der Ausbildung der Öffnung (35) zwischen Kopf (34) und Profilteil (33) entstehen aber an jedem Profil (33, 34) in der Lage nach Fig. 10 außer dem verbleibenden freien Strömungsquerschnitt noch S-förmige Durchströmungskanäle, durch die noch zusätzlich Luft strömen kann, so daß in diesem Zwischenzustand eine optimierte Strömungsführung erreicht ist, die unerwünschte Wirbelbildung, wie beispielsweise hinter den Kappenteilen (27) der Fig. 8, weitgehend verhindert. Die Fig. 11 schließlich zeigt die geschlossene Stellung, in der der Verschieberahmen (32) um das Maß (b) von rechts nach links verschoben ist. Der Strömungsquerschnitt ist in dieser Stellung vollkommen abgesperrt.

In den Fig. 12 bis 14 ist eine weitere Variante eines Einbaurahmens mit einem Absperrgitter gezeigt, das Lamellen (36) in Form eines Strömungsprofiles aufweist. Bei dieser Bauart sind zwei im wesentlichen gleich ausgebildete Anordnungen von Lamellenprofilen (36 und 37) vorgesehen, von denen die Lamellenprofile (37) in einem feststehenden und als Einbaurahmen (38) ausgebildeten Teil angeordnet sind, während die Lamellen (36) einem Rahmen (39) zugeordnet sind, der sich im Sinn der Pfeile (40) in der Strömungsrichtung (25) und gegen diese gegenüber dem Rahmen (38) verschieben läßt. Die Abmessungen sind dabei so getroffen, daß die freie Durchströmungsbreite (b) zwischen den Lamellen (37) jeweils auch der Breite der einzelnen Lamellenprofile (37 und 36) entspricht. Die Profile (36) lassen sich daher so in den Zwischenraum zwischen den Profilen (37) einschieben, daß der freie Strömungsquerschnitt zwischen den Lamellenprofilen (37) vollkommen geschlossen ist. Dabei können zwischen den feststehenden Lamellenprofilen (27) an deren vorderen Enden jeweils am oberen und unteren Ende noch stegartige Verbindungsstücke (41) vorgesehen sein, die dazu dienen, am oberen und unteren Ende der beweglichen Lamellenprofile (36) einen Abschluß vorzusehen.

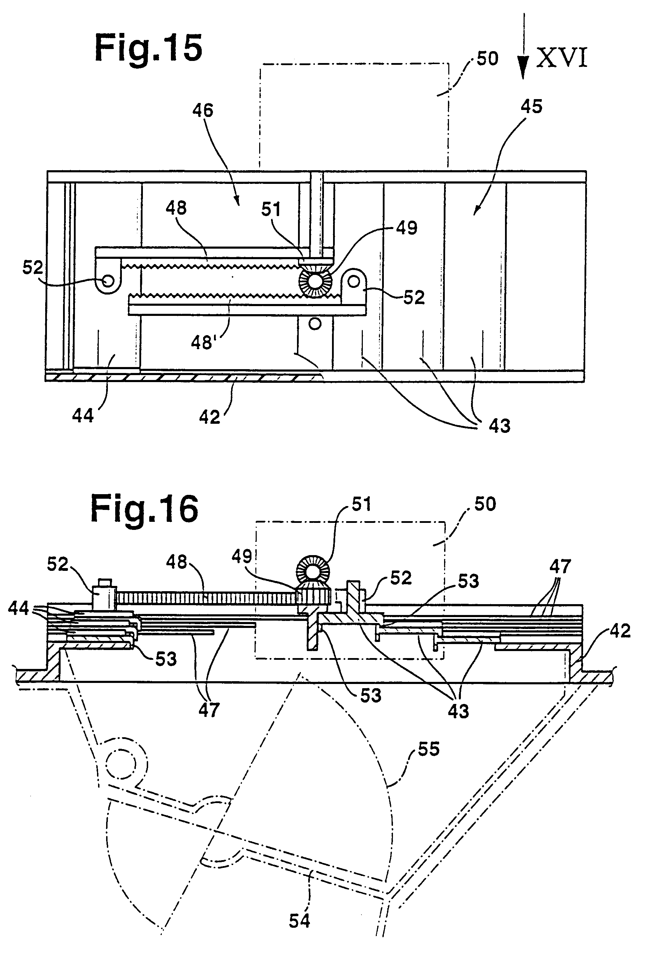

In den Fig. 15 und 16 ist schließlich noch eine letzte Variante eines Einbaurahmens (42) mit einer Anordnung von Lamellen (43) gezeigt, die sich in einer Führung im Rahmen (42) parallel zueinander in der Art von Blenden verschieben lassen.

Die Ausgestaltung ist dabei so getroffen, daß der Einbaurahmen (42), der wie auch die anderen Einbaurahmen der vorhergehenden Figuren zweckmäßig aus Kunststoff hergestellt wird, mit zwei Anordnungen von Lamellen (43) bzw. (44) versehen ist, die jeweils für sich eine rechte bzw. linke Durchströmungsöffnung (45) bzw. (46) abschließen oder freigeben. Zu diesem Zweck sind im Rahmen (42) jeweils nutenartige Führungen (47) für die Lamellen (44) bzw. (43) vorgesehen, in denen die oberen und unteren Kanten der Lamellen (43 und 44) geführt sind. Jeweils die innerste der Lamellen (43 und 44) ist über eine Zahnstange (48) mit einem Kegelrad (49) verbunden, das mit dem Kegelritzel (51) eines Elektromotors (50) in Eingriff steht. Die Zahnstangen (48 und 48') sind dabei, wie Fig. 15 zeigt, so mit dem Ritzel (49) in Eingriff, daß sie beide jeweils in entgegengesetzten Richtungen verfahren werden, wenn das Kegelrad (49) angetrieben ist. In der Fig. 15 ist auf diese Weise die Zahnstange (48) in ihrer linken Stellung in der sie die über die Anlenklasche (52) mit ihr verbundene Lamelle (44) in die linke äußerste Stellung gebracht hat. Da diese Lamelle (44) ebenso wie alle anderen Lamellen (44) an ihren beiden Seitenkanten eine Anschlagkante (53 besitzen, nimmt die von der Zahnstange (48) angetriebene Lamelle jeweils die benachbarte Lamelle mit, so daß beim Ausführungsbeispiel der Fig. 15 alle drei verschiebbaren Lamellen (44) in der linken Endstellung stehen, so daß die Öffnung (46) freigegeben ist.

Die zweite Zahnstange (48') dagegen befindet sich in der Stellung nach Fig. 15 mit ihrer Anlenklasche (52) in der der Mitte des Rahmens (42) zugewandten Stellung, in der die innerste Lamelle (43), die ebenfalls, wie auch die Lamellen (44) an beiden Enden mit Anschlagkanten (53) versehen ist, die jeweils benachbarte Lamelle mitgenommen hat, so daß alle drei Lamellen (43) sich gegenseitig überdecken und die Strömungsöffnung (45) abschließen. Eine solche Ausgestaltung kann beispielsweise vorteilhaft dann eingesetzt werden, wenn Strömungskanäle innerhalb des Gehäuses der Heizungs- und/oder Klimaeinrichtung wechselseitig geöffnet oder geschlossen werden müssen, wie das vorher anhand der Fig. 1 und den Kanälen (8 und 9) erläutert worden ist.

In Fig. 16 ist zum Vergleich der benötigten Einbaugrößen strichpunktiert noch einmal eine Lösung eingezeichnet, in der eine verschwenkbare Klappe (54) die entsprechenden Strömungskanäle, die jetzt von den Öffnungen (46 und 45) gebildet werden, abschließt oder frei gibt. Es ist deutlich zu erkennen, daß hier bedingt durch den Schwenkradius (55) der Klappe (54) und die dafür notwendige Gehäuseausbildung, wesentlich mehr Bauraum notwendig ist.

## Patentansprüche

1. Heizungs- und/oder Klimaeinrichtung, insbesondere für den Innenraum eines Kraftfahrzeuges, mit einem Gehäuse (1) mit mindestens einem Heizkörper (3) und einem Verdampfer (2), mit Ein- und Auslaßöffnungen (4, 5) und mit zwischen diesen verlaufenden Kanälen (8, 9) für wahlweise den Verdampfer, den Heizkörper oder beide durchströmende Luft sowie mit den Kanälen (8, 9) zugeordneten Steuereinrichtungen zum Schließen oder Öffnen der Kanäle und zur Bestimmung des freien Querschnittes für die durchströmende Luftmenge, dadurch gekennzeichnet, daß die Steuereinrichtungen als dem Querschnitt der Kanäle (8, 9) angepaßte Einbaurahmen (10, 10', 24, 31, 38, 42) mit mehreren im Rahmen geführten Lamellen (11, 26, 27, 33, 34, 36, 37, 43, 44) ausgebildet sind, deren Abmessungen so gewählt sind, daß sie in einer Schließstellung den Querschnitt des Rahmens abdecken.

2. Heizungs- und/oder Klimaeinrichtung nach Anspruch 1, dadurch gekennzeichnet, daß das Gehäuse (1) mit Einschiebeöffnungen oder Aufnahmefächern für die Einbaurahmen (10, 10', 24, 31, 38, 42) versehen ist.

3. Heizungs- und/oder Klimaeinrichtung nach Anspruch 1 oder 2, dadurch gekennzeichnet, daß die Lamellen (11) um ca. 90° schwenkbar um jeweils eine Achse in einem Rahmen (18) des Einbaurahmens (10) gelagert sind.

4. Heizungs- und/oder Klimaeinrichtung nach Anspruch 1 oder 2, dadurch gekennzeichnet, daß die Lamellen (44, 43) in der Art von Blenden parallel zueinander im Rahmen (42) verschiebbar sind.

5. Heizungs- und/oder Klimaeinrichtung nach Anspruch 1 oder 2, dadurch gekennzeichnet, daß schwenkbare Lamellen (11) und verschiebbare Lamellen (44, 43) in einem Einbaurahmen kombiniert sind.

6. Heizungs- und/oder Klimaeinrichtung nach Anspruch 1, dadurch gekennzeichnet, daß die Lamellen (27, 26, 34, 33, 36, 37) als Gitter mit in Strömungsrichtung ausgerichteten Strömungsprofilen ausgebildet sind.

7. Heizungs- und/oder Klimaeinrichtung nach Anspruch 6, dadurch gekennzeichnet, daß zwei der Gitter (26 bzw. 27, 33 bzw. 34, 36 bzw. 37) gegeneinander zur Beeinflussung des freien Querschnittes verschiebbar sind.

8. Heizungs- und/oder Klimaeinrichtung nach Anspruch 7, dadurch gekennzeichnet, daß die Gitter jeweils mit Lamellen versehen sind, die ein in der Anströmrichtung (25) ausgerichtetes tropfenförmiges Strömungsprofil (26, 27), 33, 34, 36, 37) bilden und daß der Zwischenraum zwischen benachbarten Lamellen der maximalen Breite (b) der Lamellen des zweiten Gitters entspricht.

9. Heizungs- und/oder Klimaeinrichtung nach Anspruch 8, dadurch gekennzeichnet, daß die beiden Gitter (38, 39) in Strömungsrichtung (25) gegeneinander bewegbar sind, so daß die Profile (36) der Lamellen eines Gitters mehr oder weniger in den freien Querschnitt zwischen den Profilen (37) des anderen Gitters hereinführbar sind.

10. Heizungs- und/oder Klimaeinrichtung nach Anspruch 6, dadurch gekennzeichnet, daß ein Teil (27, 34) der Strömungsprofile (26, 33) quer zur Anströmrichtung (25) verschiebbar ausgebildet ist.

11. Heizungs- und/oder Klimaeinrichtung nach den vorhergehenden Ansprüchen, dadurch gekennzeichnet, daß die Lamellen untereinander verbunden und gemeinsam angetrieben sind.

## Claims

1. Heating and/or air-conditioning unit, in particular for the interior space of a motor vehicle, with a housing (1) having at least one heating body (3) and one evaporator (2), with inlet and outlet openings (4, 5) and with ducts (8, 9) extending between these to allow air to flow through the evaporator, the heater or both, as desired, and with control elements associated with the ducts (8, 9) to close or open the ducts and to determine the free cross-section for the air flowing through,
**characterized in that**
the control elements consist of mounting frames (10, 10'. 24, 32, 38, 42) adapted to fit the cross-section of the ducts (8, 9) with several lamellae (11, 26, 27, 33, 34, 36, 37, 43, 44) guided in the frames, whose dimensions are chosen such that in a closing position they occlude the cross-section of the frame.

2. Heating and/or air-conditioning unit according to Claim 1,
**characterized in that**
the housing (1) is provided with insertion openings or holders for the mounting frames (10, 10', 24, 31, 38, 42).

3. Heating and/or air-conditioning unit according to Claim 1,
**characterized in that**
the lamellae (11) are each fitted so as to tilt through approximately 90E about an axis in a frame (18) of the mounting frame (10).

4. Heating and/or air-conditioning unit according to Claims 1 or 2,
**characterized in that**
the lamellae (44, 43) can slide parallel to one another in the frame (42), in the manner of shutters.

5. Heating and/or air-conditioning unit according to Claims 1 or 2,
**characterized in that**
tilting lamellae (11) and sliding lamellae (44, 43) are combined in one mounting frame.

6. Heating and/or air-conditioning unit according to Claim 1,
**characterized in that**
the lamellae (27, 26, 34, 33, 36, 37) form an array of aerodynamic profiles directed along the direction of flow.

7. Heating and/or air-conditioning unit according to Claim 6,
**characterized in that**
two of the arrays (26 or 27, 33 or 34, 36 or 37) can move relative to one another to influence the free cross-section.

8. Heating and/or air-conditioning unit according to Claim 7,
**characterized in that**
the arrays are each provided with lamellae having drop-shaped aerodynamic profiles (26, 27, 33, 34, 36, 37) directed along the flow direction, and the space between adjacent lamellae corresponds to the maximum width (b) of the lamellae of the second array.

9. Heating and/or air-conditioning unit according to Claim 8,
**characterized in that**
the two arrays (38, 39) can move relative to one another in the flow direction (25), so that the profiles (36) of the lamellae of one array can be introduced more or less into the free cross-section between the profiles (37) of the other array.

10. Heating and/or air-conditioning unit according to Claim 6,
**characterized in that**
parts (27, 34) of the aerodynamic profiles (26, 33) can be moved transversely to the flow direction (25).

11. Heating and/or air-conditioning unit according to any of the preceding Claims,
**characterized in that**
the lamellae are connected to one another and are all driven together.

## Revendications

1. Appareil de chauffage et/ou de climatisation, en particulier pour le volume intérieure d'un véhicule automobile, comprenant un boîtier (1) qui comprend lui-même au moins un corps de chauffe (3) et un évaporateur (2), des ouvertures d'entrée et de sortie (4, 5) et des canaux (8, 9) s'étendant entre ces dernières, pour donner passage à de l'air qui traverse sélectivement l'évaporateur, le corps de chauffe, ou les deux, ainsi que des dispositifs de commande combinés aux canaux (8, 9) et servant à fermer et ouvrir les canaux et à déterminer la section libre pour le débit d'air qui les parcourt, caractérisé en ce que les dispositifs de commande sont constitués par des châssis encastrés (10, 10', 24, 31, 38, 42) adaptés à la section des canaux (8, 9), qui comprennent plusieurs lamelles(11,26,27, 33, 34, 36, 37, 43, 44) guidées dans le châssis, dont les dimensions sont choisies de manière que ces lamelles obturent la section du châssis dans une position de fermeture.

2. Appareil de chauffage et/ou de climatisation selon la revendication 1, caractérisé en ce que le boîtier(1) est muni d'ouvertures d'emboîtement ou de compartiments de logement pour les châssis encastrés (10, 10', 24, 31, 38, 42).

3. Appareil de chauffage et/ou de climatisation selon la revendication 1 ou 2, caractérisé en ce que les lamelles (11) sont tourillonnées chacune autour d'un axe dans un châssis (18) du châssis encastré (10) de façon à pouvoir pivoter d'environ 90°.

4. Appareil de chauffage et/ou de climatisation selon la revendication 1 ou 2, caractérisé en ce que les lamelles (44, 43) peuvent coulisser parallèlement entre elles dans le châssis (42), à la façon d'obturateurs.

5. Appareil de chauffage et/ou de climatisation selon la revendication 1 ou 2, caractérisé en ce que des lamelles pivotantes (11) et des lamelles coulissantes (44, 43) sont combinées dans un châssis encastré.

6. Appareil de chauffage et/ou de climatisation selon la revendication 1, caractérisé en ce que les lamelles (27, 26, 34, 33, 36, 37) sont réalisées sous la forme d'une grille comprenant des profilés aérodynamiques orientés dans la direction de l'écoulement.

7. Appareil de chauffage et/ou de climatisation selon la revendication 6, caractérisé en ce que deux des grilles (26 ou, respectivement, 27, 33 ou, respectivement, 34, 36 ou, respectivement, 37) peuvent coulisser l'une par rapport à l'autre pour agir sur la section libre.

8. Appareil de chauffage et/ou de climatisation selon la revendication 7, caractérisé en ce que les grilles sont munies chacune de lamelles qui forment un profilé aérodynamique (26, 27 , 33, 34, 36, 37) en goutte d'eau orienté dans la direction (25) d'arrivée du flux et en ce que l'intervalle entre lamelles adjacentes correspond à la largeur maximale (b) des lamelles de la deuxième grille.

9. Appareil de chauffage et/ou de climatisation selon la revendication 8, caractérisé en ce que les deux grilles (38, 39) peuvent se déplacer l'une par rapport à l'autre dans la direction (25) de l'écoulement, de manière que les profilés (36) des lamelles d'une grille puissent être engagées plus ou moins dans la section libre entre les profilés (37) de l'autre grille.

10. Appareil de chauffage et/ou de climatisation selon la revendication 6, caractérisé en ce qu'une partie (27, 34) des profilés aérodynamiques (26, 33) est construite de façon à pouvoir se déplacer en translation transversalement à la direction (25) d'arrivée du flux.

11. Appareil de chauffage et/ou de climatisation selon une quelconque des revendications précédentes, caractérisé en ce que les lamelles sont reliées les unes aux autres et entraînées en commun.
